# EUROPEAN PATENT SPECIFICATION

(11) **EP 3 866 287 B1**
(45) Date of publication and mention of the grant of the patent: **20.09.2023**
(21) Application number: 21156757.3
(22) Date of filing: 12.02.2021
(51) Int. Cl.: H02G 5/02, H02B 1/20, H01B 17/18

(54) **SUPPORTING INSULATOR FOR CONDUCTOR RAILS OF A SWITCHBOARD**
ISOLIEREND SAMMELSCHIENENHALTER EINES SCHALTSCHRANKS
SUPPORT ISOLANT POUR DES BARRES CONDUCTRICES D'UN TABLEAU DE DISTRIBUTION

(30) Priority: 14.02.2020 FI 20205157
(43) Date of publication of application: 18.08.2021
(73) Proprietor: E Avenue Oy, 70420 Kuopio (FI)
(72) Inventor: JORMANAINEN, Martti, 80100 LIPERI (FI)
(74) Representative: Kespat Oy

(56) References cited:
- WO-A1-00/27008
- WO-A1-03/050928
- DE-U- 6 930 257
- DE-U1- 9 405 319
- FR-A1- 2 515 856
- US-A- 5 847 321

## Description

The invention relates to a supporting insulator assembly for busbars of an electric switchboard comprising a supporting insulator made of an insulating material and one or more adapter pieces, wherein the upper and lower edges of the supporting insulator comprise slots for fixing busbars between two supporting insulators.

An electric switchboard typically comprises busbars to which components of the electric switchboard are attached. The busbars are at a high potential so that the busbars must be attached to the grounded frame of the electric switchboard with supporting insulator assemblies made of an insulating material. Busbars are typically mounted in pairs in a horizontal plane in the electric switchboard, i.e. two busbars are arranged side by side. A contact end of a conductor is fixed to the busbars by a bolt which is arrangeable between the busbars.

A copper busbar can be dimensioned smaller than an aluminium busbar due to the better electrical conductivity of copper. However, aluminium busbars are more common due to the expensiveness of copper. An aluminium busbar is typically dimensioned in such a manner that the current flowing in the busbar can be 1.7 - 2 A/mm² for a cross-sectional area of the busbar. The current of a copper busbar can be 1.5 times that amount for a cross-sectional area. Final dimensioning depends on the increase in temperature allowed by a customer when the load increases. A 10 mm wide rail is typically used, which is then supplied as bars that are 10, 20, 30, 40, 50 and 60 mm high and even higher, if necessary. Typical currents used in the busbars are 125 A, 250 A, 320 A, 400 A and 630 A. A number of different sizes are required in an electric switchboard, 125 A, 250 A and 320 A busbars, which correspond to aluminium busbars with a height of 10, 20 and 30 mm, being the most common.

In a fault situation, very large mechanical stresses brought about by the magnetic field caused by a large fault current can form between the busbars. Consequently, the supporting insulator assembly must be able to withstand large mechanical stresses.

A supporting insulator assembly in which busbars are arranged between two supporting insulators in such a manner that the busbars are supported in slots in the edges of the supporting insulators as well as by reciprocally clamping bolts is known in the prior art. The solution in question is only suitable for use with busbars of the same size. Other corresponding solutions using two supporting insulators are also known. Plastic supporting insulators fixable only at their ends are also common. The supporting insulators can be mounted, for example, 10 mm apart from one another in the vertical direction so that it is possible to regulate how to fit a high busbar between two supporting insulators. However, it is often necessary to use busbars of varying dimensions in an electric switchboard so that supporting insulator assemblies of a number of different sizes are likewise needed. This makes the solution according to the prior art expensive to implement and awkward to use. The use of different supporting insulator assemblies also entails a waste of space.

Patent publication DE 69 30 257 U discloses a supporting insulator assembly for busbars of an electric switchboard, wherein the upper and lower edges of a supporting insulator made of an insulating material comprise slots for fixing busbars between two supporting insulators. The supporting insulator also comprises openings for fixing busbars. Also, patent publications DE 94 05 319 U1, WO 03/050928 A1, WO 00/27008 A1, US 5 847 321 A, and FR 2 515 856 A1 disclose supporting insulator assemblies for busbars of an electric switchboard. It is common to these supporting insulator assemblies that they comprise the previously mentioned problems.

The object of the invention is to provide an improved supporting insulator assembly, which is easy to use for fixing busbars of a number of different sizes to a frame of an electric switchboard and by means of which a waste of space is avoided. The characteristic features of this invention are indicated in the attached patent claim 1.

The supporting insulator assembly according to the invention for busbars of an electric switchboard comprises a supporting insulator made of an insulating material and one or more adapter pieces, wherein the upper and lower edges of the supporting insulator comprise slots for fixing busbars between two supporting insulators. The supporting insulator further comprises openings for fixing busbars and the one or more adapter pieces are arranged in openings and/or slots in order to reduce the surface area of the openings and/or slots for fixing busbars of different sizes. This way, the supporting insulator assembly can be used for fixing busbars of different sizes to the frame of the electric switchboard. By means of the adapter pieces, the surface area of the openings and/or slots can be adjusted according to requirements so that the supporting insulator assembly is scalable to busbars of different sizes. This way, a waste of space is avoided and the electric switchboard can be manufactured at a lower cost.

The invention is particularly advantageous for small busbars (125 A, 250 A, 320 A) due to the fact that, with the supporting insulator assembly according to the invention, a plurality of different-sized busbars can be installed in a same plane next to one another in order to avoid a waste of space.

In this context, "supporting insulator assembly" designates the supporting insulator as well as any adapter pieces fixed to it according to the requirements of the situation. In other words, the supporting insulator assembly consists of the supporting insulator and one or more adapter pieces fixed to it.

The supporting insulators can advantageously be fixed, by their ends, 10 mm apart from one another to vertical beams, as in known solutions. In addition, each supporting insulator, with an interior fixation element and with the aid of adapter pieces, makes it possible to install busbars of different sizes.

The adapter piece advantageously comprises a hooked gripping member as well as a support part. The adapter piece can thereby be easily arranged in the opening without separate means of fixation.

The supporting insulator advantageously has reinforcement elements for reinforcing the structure. The supporting insulator thereby resists the mechanical stress occurring in fault situations.

The reinforcement elements are advantageously joined with one another so as to form a single ribbed structure. An extremely strong structure that withstands the mechanical stress arising in fault situations is thereby achieved.

The material of the supporting insulator assembly is advantageously a fibreglass-reinforced polyamide.

The openings are advantageously arranged in pairs in such a manner that the distance between the pairs is greater than the distance between the openings of a pair, as a pair generally accommodates two busbars at the same potential.

The width of an opening advantageously corresponds to the width of a slot. This way, busbars of the same width can be arranged in both the openings and the slots.

The openings and slots are advantageously arranged so as to be aligned in the vertical direction of the supporting insulator. This way, the electric switchboard can be equipped with different-sized busbars which are aligned.

The supporting insulator advantageously comprises fixation apertures for fixing the supporting insulator assembly to the vertical profiles of the frame of the electric switchboard. This way, the supporting insulator assembly can be readily fixed inside an electricity cabinet, for example, with screws.

The supporting insulator can comprise 4 - 8, advantageously 6, openings. This way, the busbars can be arranged in the frame structure provided in the electric switchboard at selected distances from one another.

The distance between the fixation apertures provided on opposite edges of the supporting insulator can be 350 - 600 mm. The mechanical resistance of the supporting insulator assembly was tested with a fault current of 100 kA with a supporting insulator in which the distance between the fixation apertures was 450 mm.

The invention is illustrated in the following in detail with reference to the attached drawings illustrating embodiments of the invention, wherein
- Figure 1: shows a perspective view of an electric switchboard according to the invention,
- Figure 2: shows an electric switchboard according to the invention in a view from above,
- Figure 3: shows a perspective view of a supporting insulator according to the invention,
- Figure 4: shows a supporting insulator according to the invention in a view from the front,
- Figure 5a: shows a perspective view of an adapter piece according to the invention,
- Figure 5b: shows a side view of the adapter piece according to the invention,
- Figure 6a: shows a perspective view of a supporting insulator according to the invention with an adapter piece from the front,
- Figure 6b: shows a perspective view of a supporting insulator according to the invention with two adapter pieces from the rear,
- Figure 6c: shows a perspective view of a supporting insulator according to the invention with two adapter pieces from the front.

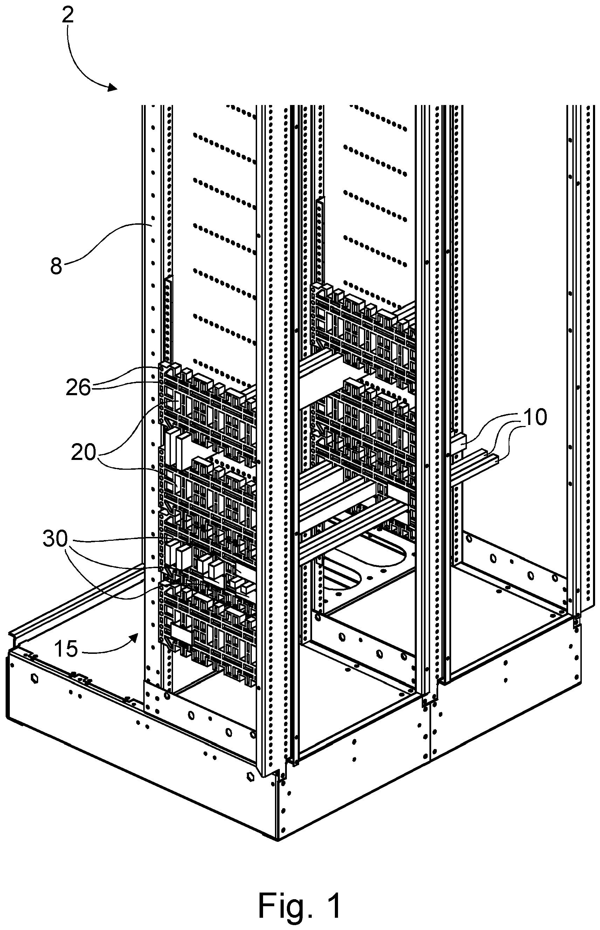

Figure 1 shows a frame structure of an electric switchboard 2, to which different-sized busbars 10 are fixed, in pairs, in a horizontal plane by means of supporting insulator assemblies 15 according to the invention. The supporting insulator assembly 15 can be attached by means of screws through the fixation apertures 26 of the supporting insulator 20 to the vertical profiles 8 of the frame of the electric switchboard 2.

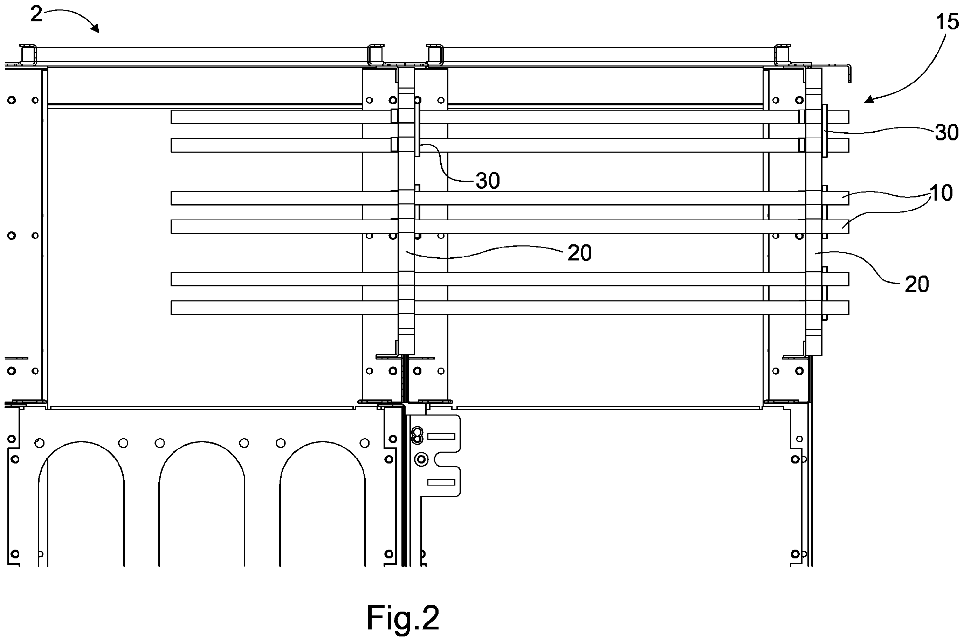

Figure 2 shows, in a view from above, a frame structure of an electric switchboard 2, to which busbars 10 are fixed by means of supporting insulator assemblies 15 according to the invention. Electric switchboards 2 can have different dimensions and different components can be fixed to the busbars 10. Consequently, the length of the busbars 10 can also vary and the busbars 10 can be supported by two or more supporting insulator assemblies 15.

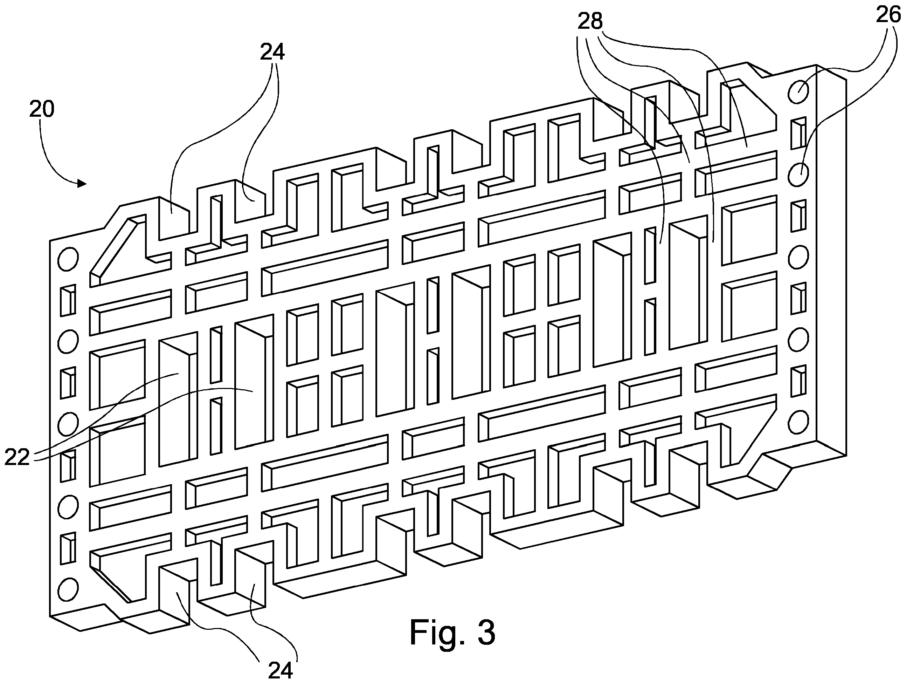

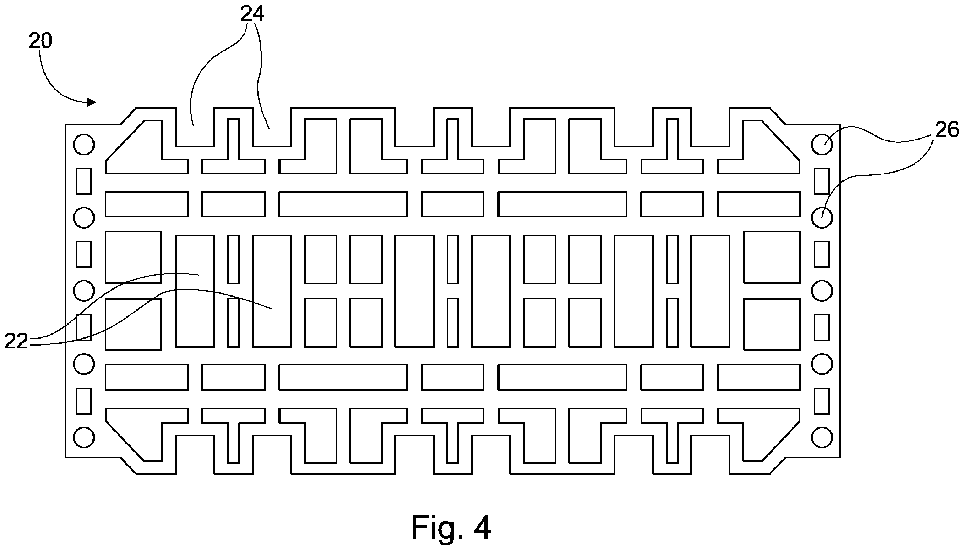

Figures 3 and 4 show a structure of a supporting insulator 20 according to the invention in greater detail. The supporting insulator 20 is made of an insulating material that can resist a mechanical load, for example of a fibreglass-reinforced polyamide. The supporting insulator 20 includes reinforcing elements 28, which are protrusions rising upward from a surface, for the reinforcement of the structure. The reinforcement elements 28 are on a larger, in terms of its surface area, side of the supporting insulator 20, advantageously on its two opposite sides. There are depressions between the reinforcement elements 28 and the reinforcement elements 28 are joined with one another so as to form a single ribbed structure by means of which the rigidity required in fault situations is achieved.

The upper and lower edges of the supporting insulator 20 include slots 24 arranged in pairs and corresponding to the prior art. Large-sized busbars 10 can be fixed to the frame of the electric switchboard 2 in such a manner that the busbar 10 is supported between two supporting insulators 20. A first supporting insulator 20 is thus arranged on the bottom side of the busbar 10 and a second supporting insulator 20 is arranged on the top side of the busbar 10, and the edges of the busbar 10 are arranged in the slots 24 of the supporting insulators 20 in the manner shown in Figure 1.

The interior of the supporting insulator 20 additionally includes openings 22 arranged in pairs and dimensioned so that busbars 10 can be arranged in them. The width of the opening 22 corresponds to the width of the slot 24. The busbar 10 can be arranged in the opening 22 of the supporting insulator 20 in the manner shown in Figure 1, wherein the busbar 10 is pushed through the opening 22 and is supported at both ends in a supporting insulator 20. Two or more supporting insulators 20 can be used for supporting the busbar 10.

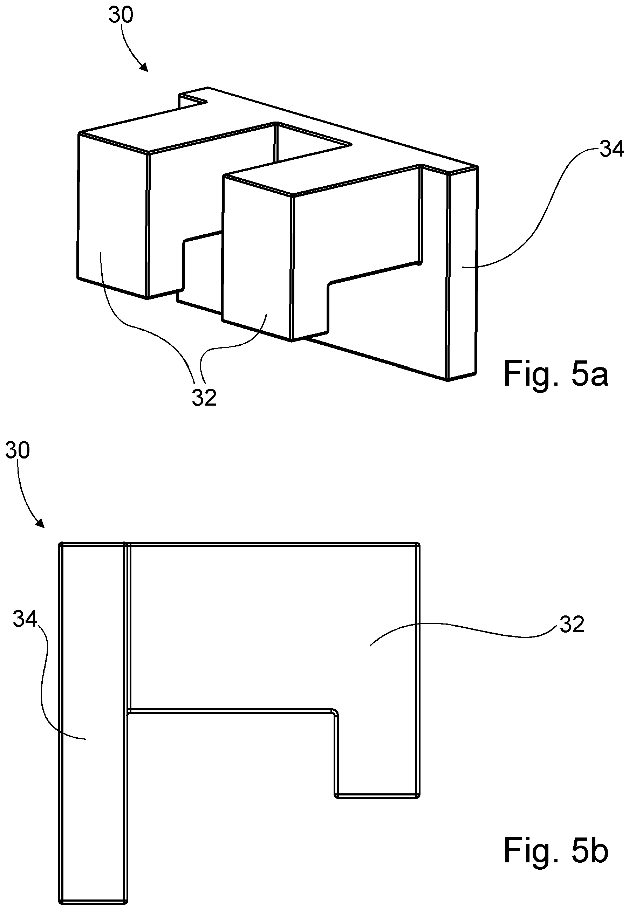

The surface area (height) of an opening 22 of a supporting insulator 20 is reduced with the adapter piece 30 shown in Figures 5a and 5b. The adapter piece 30 comprises two gripping members 32 and a support part 34. The adapter piece 30 is arranged in an opening 22 of a supporting insulator 20 in such a manner that the gripping members 32 of the adapter piece 30 are threaded through two adjacent openings 22, whereby the hooked gripping members 32 rest against the rear side of the supporting insulator 20 while the support part 34 remains on the front side of the supporting insulator 20.

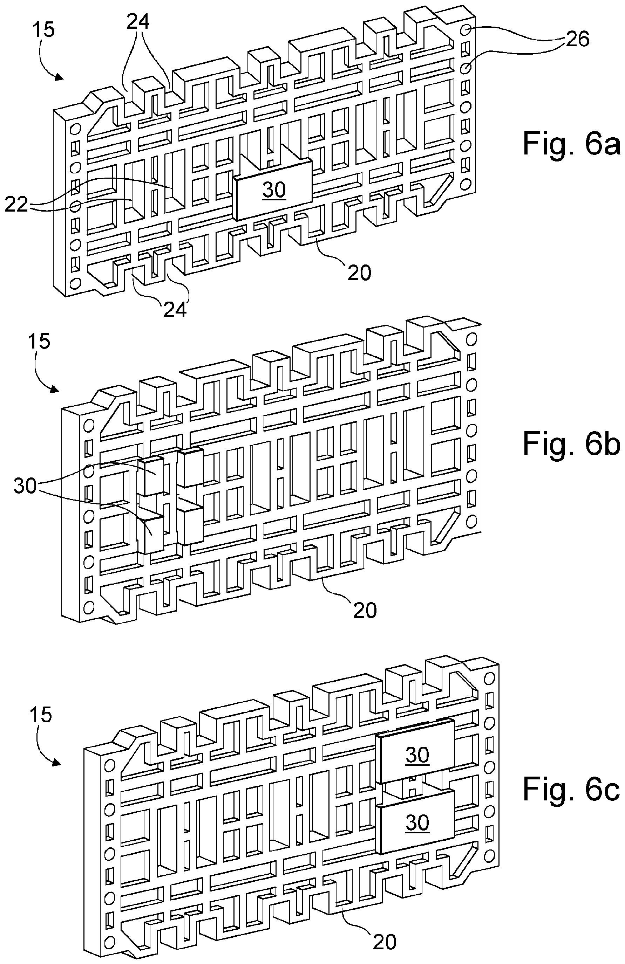

One or two adapter pieces 30 are arranged in two openings 22 of a supporting insulator 20 in the manners shown in Figures 6a - 6c. Busbars 10 of, in terms of their cross section, as many as three different sizes can thus be arranged in the openings of a supporting insulator 20 with the aid of the adapter pieces 30.

The adapter pieces 30 can also be produced in different sizes so that the surface area of the openings 22 of the supporting insulator 20 can be scaled according to requirements. The manufacture of adapter pieces 30 is less expensive than the manufacture of a supporting insulator 20 so that, thanks to the adapter pieces 30, the supporting insulator assembly 15 as a whole can be realized less expensively.

In addition to the embodiment illustrated in the foregoing, the structure of the supporting insulator assembly can also be modified in such a manner that the slots of the supporting insulator are deeper and adapter pieces are arranged in the slots for fixing different-sized busbars.

## Claims

1. A supporting insulator assembly (15) for busbars (10) of an electric switchboard (2) comprising a supporting insulator (20) made of an insulating material, wherein the upper and lower edges of the supporting insulator (20) comprise slots (24) for fixing busbars (10) between two supporting insulators (20) and wherein the supporting insulator (20) further comprises openings (22) for fixing busbars (10), **characterized in that** the supporting insulator (20)comprises one or more adapter pieces (30) configured to be arranged in said openings (22) and/or said slots (24) in order to reduce the surface area of the openings (22) and/or said slots (24) for fixing busbars (10) of different sizes.

2. The supporting insulator assembly (15) according to claim 1, **characterized in that** the adapter piece (30) comprises a hooked gripping member (32) and a support part (34).

3. The supporting insulator assembly (15) according to claim 1 or 2, **characterized in that** the supporting insulator (20) has reinforcement elements (28) for reinforcing the structure.

4. The supporting insulator assembly (15) according to claim 3, **characterized in that** the reinforcement elements (28) are joined with one another so as to form a single ribbed structure.

5. The supporting insulator assembly (15) according to any of claims 1 - 4, **characterized in that** the material of the supporting insulator assembly (15) is a fibreglass-reinforced polyamide.

6. The supporting insulator assembly (15) according to any of claims 1 - 5, **characterized in that** the openings (22) are arranged in pairs in such a manner that the distance between the pairs is greater than the distance between the openings (22) of a pair.

7. The supporting insulator assembly (15) according to any of claims 1 - 6, **characterized in that** the width of an opening (22) corresponds to the width of a slot (24).

8. The supporting insulator assembly (15) according to any of claims 1 - 7, **characterized in that** the openings (22) and the slots (24) are arranged so as to be aligned in the vertical direction of the supporting insulator (20).

9. The supporting insulator assembly (15) according to any of claims 1 - 8, **characterized in that** the supporting insulator (20) comprises fixation apertures (26) for fixing the supporting insulator assembly (15) to the vertical profiles (8) of the frame of the electric switchboard (2).

10. The supporting insulator assembly (15) according to any of claims 1 - 9, **characterized in that** the supporting insulator (20) comprises 4 - 8, advantageously 6, openings (22) .

11. The supporting insulator assembly (15) according to any of claims 1 - 10, **characterized in that** the distance between the fixation apertures (26) provided on opposite edges of the supporting insulator (20) is 350 - 600 mm.

## Patentansprüche

1. Sammelschienenhalteranordnung (15) für Sammelschienen (10) eines elektrischen Schaltschanks (2), umfassend einen Sammelschienenhalter (20) aus einem Isoliermaterial, wobei die oberen und unteren Kanten des Sammelschienenhalters (20) Schlitze (24) umfassen, um Stromschienen (10) zwischen zwei Sammelschienenhaltern (20) zu befestigen, und wobei der Sammelschienenhalter (20) weiter Öffnungen (22) umfasst, um Stromschienen (10) zu befestigen, **dadurch gekennzeichnet, dass** der Sammelschienenhalter (20) einen oder mehrere Adapterstücke (30) umfasst, die konfiguriert sind, um in den Öffnungen (22) bzw. den Schlitzen (24) angeordnet zu werden, um den Oberflächenbereich der Öffnungen (22) bzw. der Schlitze (24) zur Befestigung von Stromschienen (10) unterschiedlicher Größen zu verringern.

2. Sammelschienenhalteranordnung (15) nach Anspruch 1, **dadurch gekennzeichnet, dass** das Adapterstück (30) ein hakenförmiges Griffelement (32) und ein Stützteil (34) umfasst.

3. Sammelschienenhalteranordnung (15) nach Anspruch 1 oder 2, **dadurch gekennzeichnet, dass** der Sammelschienenhalter (20) Verstärkungselemente (28) zur Verstärkung der Struktur umfasst.

4. Sammelschienenhalteranordnung (15) nach Anspruch 3, **dadurch gekennzeichnet, dass** die Verstärkungselemente (28) miteinander verbunden sind, um eine einheitliche Rippenstruktur zu bilden.

5. Sammelschienenhalteranordnung (15) nach einem der Ansprüche 1-4, **dadurch gekennzeichnet, dass** das Material der Sammelschienenhalteranordnung (15) ein glasfaserverstärktes Polyamid ist.

6. Sammelschienenhalteranordnung (15) nach einem der Ansprüche 1-5, **dadurch gekennzeichnet, dass** die Öffnungen (22) paarweise angeordnet sind, sodass der Abstand zwischen den Paaren größer ist als der Abstand zwischen den Öffnungen (22) eines Paars.

7. Sammelschienenhalteranordnung (15) nach einem der Ansprüche 1-6, **dadurch gekennzeichnet, dass** die Breite einer Öffnung (22) der Breite eines Schlitzes (24) entspricht.

8. Sammelschienenhalteranordnung (15) nach einem der Ansprüche 1-7, **dadurch gekennzeichnet, dass** die Öffnungen (22) und die Schlitze (24) so angeordnet sind, dass sie in vertikaler Richtung des Sammelschienenhalters (20) ausgerichtet sind.

9. Sammelschienenhalteranordnung (15) nach einem der Ansprüche 1-8, **dadurch gekennzeichnet, dass** der Sammelschienenhalter (20) Befestigungsöffnungen (26) zur Befestigung der Sammelschienenhalteranordnung (15) an den vertikalen Profilen (8) des Rahmens des elektrischen Schaltschranks (2) umfasst.

10. Sammelschienenhalteranordnung (15) nach einem der Ansprüche 1-9, **dadurch gekennzeichnet, dass** der Sammelschienenhalter (20) 4-8, bevorzugt 6 Öffnungen (22) umfasst.

11. Sammelschienenhalteranordnung (15) nach einem der Ansprüche 1-10, **dadurch gekennzeichnet, dass** der Abstand zwischen den Befestigungsöffnungen (26), die an gegenüberliegenden Enden des Sammelschienenhalter (20) angebracht sind, 350-600 mm beträgt.

## Revendications

1. Un ensemble de supports isolants (15) pour barres-omnibus (10) d'un tableau de distribution électrique (2) comprenant un support isolant (20) composé d'un matériau isolant, où les bords supérieurs et inférieurs du support isolant (20) comportent des fentes (24) pour fixer les barres-omnibus (10) entre les deux supports isolants (20) et où le support isolant (20) comprend en outre des ouvertures (22) pour fixer les barres-omnibus (10), **caractérisé en ce que** le support isolant (20) comprend un ou plusieurs adaptateurs (30) prévus pour être disposés dans lesdites ouvertures (22) et/ou fentes (24) afin de réduire la surface des ouvertures (22) et/ou desdites fentes (24) en vue de fixer des barres-omnibus (10) de différentes tailles.

2. L'ensemble de supports isolants (15) conformément à la revendication 1, **caractérisé en ce que** l'adaptateur (30) se compose d'un élément de préhension recourbé (32) et d'une pièce de support (34).

3. L'ensemble de supports isolants (15) conformément à la revendication 1 ou 2, **caractérisé en ce que** le support isolant (20) est doté d'éléments de renforcement (28) pour renforcer la structure.

4. L'ensemble de supports isolants (15) conformément à la revendication 3, **caractérisé en ce que** les éléments de renforcement (28) sont reliés les uns aux autres de manière à former une seule structure nervurée.

5. L'ensemble de supports isolants (15) conformément à l'une quelconque des revendications 1 à 4, **caractérisé en ce que** le matériau utilisé pour l'ensemble de supports isolants (15) est du polyamide renforcé par des fibres de verre.

6. L'ensemble de supports isolants (15) conformément à l'une quelconque des revendications 1 à 5, **caractérisé en ce que** les ouvertures (22) sont disposées par paires afin que la distance entre les paires soit supérieure à la distance entre les ouvertures (22) d'une paire.

7. L'ensemble de supports isolants (15) conformément à l'une quelconque des revendications 1 à 6, **caractérisé en ce que** la largeur d'une ouverture (22) correspond à la largeur interne nominale d'une fente (24).

8. L'ensemble de supports isolants (15) conformément à l'une quelconque des revendications 1 à 7, **caractérisé en ce que** les ouvertures (22) et les fentes (24) sont disposées de manière à être alignées dans le sens vertical par rapport au support isolant (20).

9. L'ensemble de supports isolants (15) conformément à l'une quelconque des revendications 1 à 8, **caractérisé en ce que** le support isolant (20) comporte des orifices de fixation (26) pour fixer l'ensemble de supports isolants (15) aux profils verticaux (8) du cadre du tableau de distribution électrique (2).

10. L'ensemble de supports isolants (15) conformément à l'une quelconque des revendications 1 à 9, **caractérisé en ce que** le support isolant (20) dispose de quatre à huit ouvertures (22), avantageusement six.

11. L'ensemble de supports isolants (15) conformément à l'une quelconque des revendications 1 à 10, **caractérisé en ce que** la distance entre les orifices de fixation (26) sur les bords opposés du support isolant (20) est comprise entre 350 et 600 mm.
